# EUROPÄISCHE PATENTANMELDUNG

(11) **EP 4 488 539 A1**
(43) Veröffentlichungstag der Anmeldung: **08.01.2025**
(21) Anmeldenummer: 24020219.2
(22) Anmeldetag: 02.07.2024
(51) Int. Cl.: F16D 41/00, F16D 41/12, F16D 41/30

(54) **FREILAUFNABE MIT SPERRKÖRPER-ANORDNUNG**

(30) Priorität: 06.07.2023 DE 102023117915
(71) Anmelder: SRAM Deutschland GmbH, 97424 Schweinfurt (DE)
(72) Erfinder: Göbel, Joachim, 97279 Prosselsheim (DE); Kehrer, Martin, 97616 Bad Neustadt (DE)

(57) **Zusammenfassung**

Eine Freilaufnabe 10 für ein Fahrrad umfasst: einen Antreiber 16 und eine Nabenhülse 14, die jeweils um eine gemeinsame Drehachse X drehbar an einer Nabenachse 12 gelagert sind, eine Sperrkörper-Anordnung 18 mit wenigstens einem Sperrkörper 20, der zwischen einer Sperrstellung und einer Freigabestellung verstellbar in einer radialen Sperrkörper-Ausnehmung 22 gelagert ist, und eine Vorspanneinrichtung 24, die dazu konfiguriert ist, den Sperrkörper 20 zur Sperrstellung hin vorzuspannen, wobei die Sperrkörper-Ausnehmung 22 in einem Bauteil aus Antreiber 16 und Nabenhülse 14 vorgesehen ist, während das andere eine radiale Mitnahmeverzahnung 26 aufweist oder drehfest mit dieser verbunden ist, wobei die Oberfläche des Sperrkörpers 20 eine Kopplungsfläche 35 aufweist, die in der Sperrstellung an einer Anlagefläche 45 der Sperrkörper-Ausnehmung 22 anliegt, während ein Eingriffsabschnitt 33 des Sperrkörpers 20 in die Mitnahmeverzahnung 26 eingreift, so dass bei Rotation des Antreibers 16 in einer ersten Drehrichtung R1 um die Drehachse X Drehmoment über die Kopplungsfläche 35 vom Antreiber 16 auf die Nabenhülse 14 übertragen wird, und wobei der Sperrkörper 20 in der Freigabestellung eine Rotation der Nabenhülse 14 in der ersten Drehrichtung R1 relativ zum Antreiber 16 zulässt, und wobei mehr als die Hälfte der Kopplungsfläche 35 als planarer Bereich 36 ausgebildet ist.

## Beschreibung

Die vorliegende Erfindung betrifft eine Freilaufnabe für ein Fahrrad und genauer eine Freilaufnabe mit den Merkmalen des Oberbegriffs von Anspruch 1.

Eine solche Freilaufnabe umfasst einen Antreiber und eine Nabenhülse, die jeweils um eine gemeinsame Drehachse drehbar an einer Nabenachse gelagert sind, eine Sperrkörper-Anordnung mit wenigstens einem Sperrkörper, der zwischen einer Sperrstellung und einer Freigabestellung verstellbar in einer radialen Sperrkörper-Ausnehmung gelagert ist, und eine Vorspanneinrichtung, die dazu konfiguriert ist, den Sperrkörper zur Sperrstellung hin vorzuspannen.

Dabei ist die Sperrkörper-Ausnehmung in einem Bauteil aus Antreiber und Nabenhülse vorgesehen, während das andere Bauteil aus Antreiber und Nabenhülse eine radiale Mitnahmeverzahnung aufweist oder drehfest mit der Mitnahmeverzahnung verbunden ist, wobei eine Oberfläche des Sperrkörpers eine Kopplungsfläche aufweist, die in der Sperrstellung an einer Anlagefläche der Sperrkörper-Ausnehmung anliegt, während ein Eingriffsabschnitt des Sperrkörpers in die Mitnahmeverzahnung eingreift, so dass bei Rotation des Antreibers in einer ersten Drehrichtung um die Drehachse Drehmoment über die Kopplungsfläche vom Antreiber auf die Nabenhülse übertragen wird, wobei der Sperrkörper in der Freigabestellung nicht in die Mitnahmeverzahnung eingreift und eine Rotation der Nabenhülse in der ersten Drehrichtung relativ zum Antreiber zulässt, so dass die Nabenhülse den Antreiber in der ersten Drehrichtung überholen kann.

Bezüglich der Anordnung von Mitnahmeverzahnung und Sperrkörper-Ausnehmung gibt es also zwei Alternativen. Gemäß Alternative eins ist die Sperrkörper-Ausnehmung in der Nabenhülse als dem einen Bauteil vorgesehen, und der Antreiber als das andere Bauteil weist die Mitnahmeverzahnung auf bzw. ist drehfest mit der Mitnahmeverzahnung verbunden. Gemäß Alternative zwei ist die Sperrkörper-Ausnehmung im Antreiber als dem einen Bauteil vorgesehen, und die Nabenhülse als das andere Bauteil weist die Mitnahmeverzahnung auf bzw. ist drehfest mit der Mitnahmeverzahnung verbunden.

Der Begriff "drehfest" bezieht sich dabei auf eine Drehung um die gemeinsame Rotationsachse von Antreiber und Nabenhülse.

Eine Freilaufnabe mit den Merkmalen des Oberbegriffs von Anspruch 1 ist beispielsweise bekannt aus der Druckschrift DE 4025708 A1. Dabei sind die Sperrkörper jeweils rotatorisch verstellbare Sperrklinken mit einer relativ kleinen zylindrischen Kopplungsfläche.

Ein Nachteil solcher rotatorisch bewegter Klinken ist, dass sie entweder geringere Kräfte übertragen können, oder größer gebaut werden müssen, da der Kraftvektor solcher Klinken einen hohen radialen Anteil besitzt, den die aufnehmenden Gehäusebauteile abstützen müssen.

Axialfreiläufe dahingegen, bei denen das Drehmoment über axiale Verzahnungen vom Antreiber auf die Nabenhülse übertragen wird, können zwar bei geringen Abmessungen große Kräfte übertragen, sind aber teuer in der Herstellung. Eine Fahrradnabe mit Axialfreilauf, auch als Zahnscheibenfreilauf bezeichnet, wird zum Beispiel in der EP 3984764 A1 beschrieben.

Vor diesem Hintergrund besteht die Aufgabe der vorliegenden Erfindung darin, die gattungsgemäße Freilaufnabe so weiterzuentwickeln, dass sie leicht an unterschiedliche Anforderungen hinsichtlich des zu übertragenden Drehmoments anpassbar und dabei leicht, klein und günstig ist.

Hierzu wird eine Freilaufnabe mit den Merkmalen von Anspruch 1 vorgeschlagen. Verschiedene Ausführungsformen der Erfindung sind in den abhängigen Ansprüchen beschrieben.

Erfindungsgemäß ist vorgesehen, dass mehr als die Hälfte der Kopplungsfläche als planarer Bereich ausgebildet ist, über den Kraft bzw. Drehmoment effektiv vom Antreiber auf die Nabenhülse übertragen werden kann.

Die Sperrkörper-Anordnung kann mehrere Sperrkörper umfassen, die in jeweils zugeordneten Sperrkörper-Ausnehmungen gelagert sind, je nach dem zu übertragenden Drehmoment zum Beispiel zwei, drei, vier oder sechs Sperrkörper, die zur Vereinfachung der Fertigung bevorzugt gleichartig ausgebildet sind.

Soweit in dieser Anmeldung daher Merkmale "des Sperrkörpers" bzw. "der Sperrkörper-Ausnehmung" oder "des wenigstens einen Sperrkörpers" bzw. "der wenigstens einen Sperrkörper-Anordnung" beschrieben werden, versteht sich, dass die jeweiligen Merkmale für eine Sperrkörper-Anordnung mit mehreren Sperrkörpern jeweils bevorzugt für mehrere Sperrkörper, besonders bevorzugt für alle Sperrkörper der Sperrkörper-Anordnung bzw. die zugeordneten Sperrkörper-Ausnehmungen zutreffen, sofern nichts anderes angegeben ist.

Bevorzugt ist die Sperrkörper-Ausnehmung in der Nabenhülse ausgebildet, während die Mitnahmeverzahnung auf dem Antreiber vorhanden ist. Dies hat den Vorteil, dass die Mitnahmeverzahnung zusammen mit dem Kassettenprofil des Antreibers in einem einzigen Herstellungsprozess kostengünstig gefertigt werden kann.

Der ebenfalls nicht ausgeschlossene alternative Grundaufbau mit in Sperrkörper-Ausnehmungen am Antreiber gelagerten Sperrkörpern ist teurer, da dann ein speziell gefertigter hochfester Ring z.B. aus Stahl mit der Mitnahmeverzahnung an der meist aus leichterem, weniger festem Werkstoff wie Aluminium gefertigten Nabenhülse befestigt werden muss.

Dabei kann in einer Ausgestaltungsvariante die gesamte Kopplungsfläche planar ausgebildet sein, wobei der Sperrkörper als Sperrschieber in einer Translationsbewegung zwischen der Sperrstellung und der Freigabestellung verschiebbar in der Sperrkörper-Ausnehmung gelagert ist.

Dies hat den Vorteil, dass der Kraftvektor zur rotatorischen Bewegungsübertragung fast ausschließlich tangential wirkt und nur eine sehr geringe Radialkomponente aufweisen kann. Dadurch können, ähnlich wie bei Axialfreiläufen, große Kräfte bei geringen Abmessungen übertragen werden, wobei die Herstellungskosten geringer ausfallen.

Allerdings neigen Sperrschieber unter Umständen zum Verkippen in der Sperrkörper-Ausnehmung, was eine hohe Genauigkeit der Anschlagflächen erfordert.

Für eine stabilere Lagerung kann in einer alternativen Ausgestaltungsvariante daher vorgesehen sein, dass die Kopplungsfläche des Sperrkörpers sich aus dem planaren Bereich und einem gebogenen Bereich, insbesondere einem zylindrischen Bereich zusammensetzt, wobei der gebogene Bereich zur drehbaren Lagerung des Sperrkörpers als Sperrklinke bei seiner Schwenkbewegung zwischen der Sperrstellung und der Freigabestellung dient. Insbesondere kann der zylindrische Bereich tangential in den planaren Bereich übergehen. Diese Variante wird hier im Folgenden auch als Flachklinke bezeichnet und verbindet Vorteile eines Schiebergesperres, also große Eingriffsflächen und die Möglichkeit überwiegend tangentialer Eingriffswinkel mit Vorteilen einer Klinke, also der stabilen Lagerung bei weniger hohen Anforderungen an die Präzision des Klinkensitzes.

Tests haben gezeigt, dass bei geeigneter Einstellung des Neigungswinkels der in der ersten Drehrichtung vorlaufenden Zahnflanken der Mitnahmeverzahnung an einem Stahl-Antreiber die meisten Anwendungen mit nur zwei Klinken im Eingriff in jeweils einen einzigen Zahnzwischenraum auskommen, wenn die Flächen der in der ersten Drehrichtung vorlaufenden Zahnflanken hinreichend groß sind.

Besonders zur Wechselwirkung mit einer Sperrklinke, deren Eingriffsabschnitt aus einem einzigen Arm gebildet wird, der nur in einen einzigen Zahnzwischenraum eingreift, kann vorgesehen sein, dass für wenigstens einen Zahn, vorzugsweise für mehrere oder alle Zähne der radialen Mitnahmeverzahnung vorgesehen ist, dass eine Senkrechte auf die in der ersten Drehrichtung vorlaufenden Zahnflanke durch einen Mittelpunkt dieser Zahnflanke die in der ersten Drehrichtung nachlaufende Zahnflanke des gleichen Zahns nicht schneidet, was das Risiko eines Abscherens der Zähne im Betrieb verringert.

Auch sollen Ausführungsbeispiele nicht ausgeschlossen sein, bei denen die Sperrkörper-Anordnung sowohl Sperrschieber als auch Sperrklinken umfasst.

Die planare Kopplungsfläche kann so groß ausgebildet werden, dass die Flächenpressung stark reduziert wird. Dadurch kann die Klinkenanzahl der Sperrkörper-Anordnung verringert oder/und ein weniger fester Werkstoff für die Sperrkörper verwendet werden, z.B. AL 6082-T6 anstatt des ansonsten notwendigen AL 7075-T6.

Insbesondere kann vorgesehen sein, dass der planare Bereich der Kopplungsfläche mehr als das Zweifache eines Zahnkontaktbereichs der Oberfläche des Sperrkörpers beträgt, bevorzugt mehr als das Dreifache, besonders bevorzugt mehr als das Fünffache, wobei der Zahnkontaktbereich derjenige Bereich der Oberfläche des Sperrkörpers ist, der in der Sperrstellung in flächigem Kontakt mit den in der ersten Drehrichtung vorlaufenden Zahnflanken der Mitnahmeverzahnung steht.

Für eine sinnvolle Weiterleitung der Kraft bzw. des Drehmoments innerhalb des Sperrkörpers ist vorzugsweise vorgesehen, dass eine Senkrechte auf den Zahnkontaktbereich der Oberfläche des Sperrkörpers durch den Mittelpunkt des Zahnkontaktbereichs den planaren Bereich der Kopplungsfläche des Sperrkörpers schneidet, und zwar besonders bevorzugt im oder nahe dem Mittelpunkt des planaren Bereichs. Dies ist besonders dann sinnvoll. wenn der Eingriffsabschnitt des Sperrkörpers nur aus einem einzigen Arm gebildet ist, der dazu konfiguriert ist, in nur einen Zahnzwischenraum der Mitnahmeverzahnung einzugreifen

Für eine effektive Drehmomentübertragung ist bevorzugt vorgesehen, dass der planare Bereich der Kopplungsfläche mit dem Lot vom Mittelpunkt des planaren Bereichs auf die Drehachse einen Winkel von nicht mehr als 30° einschließt, bevorzugt von nicht mehr als 20°, noch mehr bevorzugt von nicht mehr als 10°.

Der Sperrkörper kann dabei insbesondere eine konstante Querschnittsform senkrecht zu einer Richtung aufweisen, die im montierten Zustand parallel zur Drehachse der Freilaufnabe verläuft, oder er kann zumindest auf einer solchen konstanten Querschnittsform basieren.

Die Anfederung der Sperrkörper ist durch verschiedene Ausgestaltungsvarianten der Vorspanneinrichtung möglich, die ein Element umfassen oder aus einem Element gebildet sein kann, das ausgewählt ist aus einer Druckfeder, einer Schraubendruckfeder, einem Schraubenfederring, einer Wurmfeder, einem Sprengring, einer Gummifeder, einer Zellstoff-Feder, einer Sylomerfeder oder einer Kombination davon.

Die Vorspanneinrichtung kann pro Sperrkörper eine separate, dem jeweiligen Sperrkörper zugeordnete Feder umfassen, z.B. eine Schraubendruckfeder, um jeden einzelnen Sperrkörper besonders gezielt zur Sperrstellung vorzuspannen.

Zur Reduktion der Bauteileanzahl und Vereinfachung der Montage kann jedoch alternativ vorgesehen sein, dass die Vorspanneinrichtung eine Feder umfasst, die mehrere Sperrkörper zur Sperrstellung vorspannt, bevorzugt eine einzige Feder für alle Sperrkörper der Sperrkörper-Anordnung.

In letzterem Fall kommt für Sperrschieber vorzugsweise ein Wurmfederring in Frage, der die Sperrschieber radial einwärts vorspannt, während für Sperrklinken auch ein Sprengring zum Einsatz kommen kann, der auf die Klinken von radial außen oder von radial innen so einwirkt, dass die Klinken jeweils in einer Schwenkrichtung auf die Sperrstellung zu vorgespannt werden.

Zur Montageerleichterung, können die Sperrkörper-Anordnung, die Vorspann-Einrichtung und das Bauteil aus Antreiber und Nabenhülse, in dem die wenigstens eine Sperrkörper-Ausnehmung vorgesehen ist, zu einer ersten Baugruppe vormontierbar sein, wobei die Vorspanneinrichtung die Sperrkörper-Anordnung an dem Bauteil hält, so dass verhindert wird, dass die Sperrkörper aus den zugeordneten Sperrkörper-Ausnehmungen heraus fallen. Diese erste Baugruppe kann dann auf das andere Bauteil mit der Mitnahmeverzahnung längs der gemeinsamen Drehachse aufgeschoben oder in das andere Bauteil eingeschoben werden, je nachdem ob die Mitnahmeverzahnung radial nach außen oder nach innen weist.

In einer Ausführungsform mit Sperrschieber kann dies beispielsweise dadurch realisiert werden, dass die wenigstens eine Sperrkörper-Ausnehmung sich radial nach innen verjüngt und die Vorspanneinrichtung, z.B. ein Wurmfederring, den wenigstens einen Sperrschieber radial einwärts vorspannt und somit unverlierbar in seinen Sitz in der Ausnehmung drückt.

Zur besseren Aufteilung der in den Sperrkörper eingeleiteten bzw. der aus diesem ausgeleiteten Kraft, je nachdem ob die Sperrkörper-Ausnehmung im Antreiber oder in der Nabenhülse vorgesehen sind, oder zur Erhöhung der übertragbaren Gesamtkraft, kann vorgesehen sein, dass der Eingriffsabschnitt des wenigstens einen Sperrkörpers zwei oder mehr Arme aufweist, die dazu ausgebildet sind, in der Sperrstellung in benachbarte Zahnzwischenräume der radialen Mitnahmeverzahnung einzugreifen.

Diese Ausgestaltung ist insbesondere bevorzugt, wenn der Sperrkörper als Sperrschieber ausgebildet ist, da so auch das auf den Sperrkörper wirkende Kippmoment verringert werden und die Lagerung so stabilisiert werden kann.

Auch ist ein sauberer Eingriff mit zwei oder mehr Armen bei Schiebern leichter zu realisieren als bei Klinken, da bei einer reinen Translationsbewegung alle Arme einen Weg der gleichen Länge zurücklegen. Die nachteiligen Winkelverhältnisse von rotatorisch bewegten Klinken sind eliminiert und es ist keine hohe Präzision erforderlich.

Sperrklinken mit mehr als einem Arm sind zwar grundsätzlich möglich, müssen aber sehr genau gefertigt werden, da bedingt durch das rotatorische Eingriffsprinzip der äußere Arm in der gleichen Zeit eine größere Wegstrecke zurücklegen muss und deshalb eine höhere Eingriffsgeschwindigkeit erfährt. Sowohl die Sitze und Führungen der Klinke und der Eingriffsverzahnung als auch deren Maßtoleranzen müssen in diesem Fall sehr eng ausgelegt und mit hoher Präzision gefertigt werden.

Wie einleitend erwähnt weist die Sperrkörper-Anordnung bevorzugt mehrere Sperrkörper auf, vorzugsweise gleichartige Sperrkörper, und entsprechend gibt es dann mehrere Sperrkörper-Ausnehmungen, die um den Umfang des Bauteils verteilt sind, in dem sie angeordnet sind, so dass die Kraft bzw. das Drehmoment des Antreibers auf die Sperrkörper verteilt wird.

Durch die Anzahl der Sperrkörper und die Anzahl der Zähne pro Sperrkörper können unterschiedliche Anwendungen modular realisiert und ein leichter Aufbau ermöglicht werden. Beispielsweise ist es denkbar bei gleicher Nabenhülse mit zwei Sperrkörpern eine Rennradnabe, mit drei Sperrkörpern eine MTB-Nabe und mit sechs Sperrkörpern eine eMTB-Nabe oder eine Lastenradnabe zu realisieren, entsprechend den jeweiligen Drehmomenten der speziellen Anwendung, wobei dann je nach Anwendung einzelne Sperrkörper-Ausnehmungen leer bleiben können. Die Sperrkörper können dabei insbesondere Sperrschieber mit jeweils zwei Zähnen sein.

Gemäß einem bevorzugten Ausführungsbeispiel sind die Sperrkörper-Ausnehmungen so verteilt, dass alle Sperrkörper gleichzeitig in die Mitnahmeverzahnung eingreifen können, so dass sich bei Rotation des Antreibers in der ersten Drehrichtung die zu übertragende Kraft bzw. das zu übertragende Drehmoment sich gleichmäßig auf alle Sperrkörper verteilt.

Um jedoch den Drehwinkel zu verkleinern, der maximal benötigt wird, bis nach Beginn einer Rotation des Antreibers in der ersten Drehrichtung auch tatsächlich Drehmoment auf die Nabenhülse übertragen wird, kann vorgesehen sein, dass die Sperrkörper-Anordnung mehrere Gruppen von Sperrkörpern aufweist, die in jeweiligen Sperrkörper-Ausnehmungen um den Umfang des einen Bauteils so verteilt gelagert sind, dass für jede der Gruppen die Sperrkörper der jeweiligen Gruppe in der Sperrstellung bei geeigneter Rotationsstellung der Mitnahmeverzahnung gleichzeitig in diese eingreifen, während Sperrkörper verschiedener Gruppen nicht gleichzeitig in die Mitnahmeverzahnung eingreifen können.

Hierfür kann vorgesehen sein, dass der Winkelabstand unmittelbar benachbarter Zähne der Mitnahmeverzahnung einen konstanten, vorgegebenen Wert aufweist, und für jede Gruppe die Sperrkörper der jeweiligen Gruppe einen Winkelabstand voneinander aufweisen, der einem ganzzahligen Vielfachen des vorgegebenen Werts entspricht, während Sperrkörper verschiedener Gruppen einen Winkelabstand voneinander aufweisen, der sich von einem ganzzahligen Vielfachen des vorgegebenen Werts durch einen Bruchteil des vorgegebenen Werts unterscheidet. Wird die Sperrkörper-Anordnung durch n Gruppen gebildet so kann dieser Bruchteil m/n betragen, wobei m eine natürliche Zahl ist, die größer als Null aber kleiner als n ist. Insbesondere kann der Bruchteil bei 2 Gruppen 1/2 betragen, bei 3 Gruppen 1/3 oder/und 2/3 usw.

Es soll im Übrigen nicht ausgeschlossen sein, dass eine Gruppe oder auch mehrere oder alle Gruppen jeweils durch einen einzigen Sperrkörper gebildet werden. Bevorzugt weisen alle Gruppen die gleiche Anzahl von Sperrkörpern auf.

Die Anmelderin behält sich vor, Schutz auch für ein Fahrrad mit einer erfindungsgemäßen Freilaufnabe zu beanspruchen.

Im Folgenden wird die vorliegende Erfindung anhand einiger Ausführungsbeispiele illustriert, die in den beigefügten Figuren dargestellt sind. Dabei zeigen:
- Fig. 1: ein erstes Ausführungsbeispiel einer erfindungsgemäßen Freilaufnabe in einer perspektivischen Darstellung.
- Fig. 2: den Gegenstand von Fig. 1 in einer Dreiviertel-Längsschnitt-Darstellung,
- Fig. 3: den Gegenstand von Fig. 1 in einer Querschnittansicht einer zur Drehachse senkrechen Schnittebene, die in Fig.1 angedeutet und mit III-III bezeichnet ist,
- Fig. 4 und 5: eine Ausschnittvergrößerung von Fig. 3 mit als Flachklinke ausgebildeter Sperrklinke in der Sperrstellung bzw. in der Freigabestellung
- Fig. 6 und 7: den Gegenstand von Fig. 1 in unterschiedlichen Ansichten, wobei die Nabenachse und der Antreiber ausgeblendet sind.
- Fig. 8 und 9: den Gegenstand von Fig. 1 in unterschiedlichen Ansichten, wobei die Nabenachse und die Nabenhülse ausgeblendet sind.
- Fig. 10 bis 12: unterschiedliche Ansichten einer der Sperrklinken der Freilaufnabe aus Fig. 1
- Fig. 13 und 14: den Figuren 4 und 5 entsprechende Darstellungen für ein zweites Ausführungsbeispiel einer erfindungsgemäßen Freilaufnabe mit leicht veränderter Form und Anfederung der Sperrklinken,
- Fig. 15 und 16: den Figuren 4 und 5 entsprechende Darstellungen für ein drittes Ausführungsbeispiel einer erfindungsgemäßen Freilaufnabe mit als Sperrschiebern ausgebildeten Sperrkörpern, und
- Fig. 17: eine der Fig. 3 entsprechende Querschnittansicht eines vierten Ausführungsbeispiels einer erfindungsgemäßen Freilaufnabe mit Sperrschiebern.

Aus Gründen der Übersichtlichkeit sind nicht in jeder Figur alle Merkmale mit Bezugszeichen versehen, sondern in erster Linie nur diejenigen Merkmale, die zur Erläuterung der jeweiligen Figur benötigt werden. Dies gilt insbesondere, wenn eine Figur mehrere gleichartige Merkmale enthält.

Gleiche oder einander entsprechende Merkmale der verschiedenen Ausführungsbeispiele sind jeweils mit den gleichen Bezugszeichen versehen, und die weiteren Ausführungsbeispiele werden vorwiegend nur insoweit erläutert, als sie sich vom ersten Ausführungsbeispiel unterscheiden, auf dessen Beschreibung ansonsten verwiesen wird.

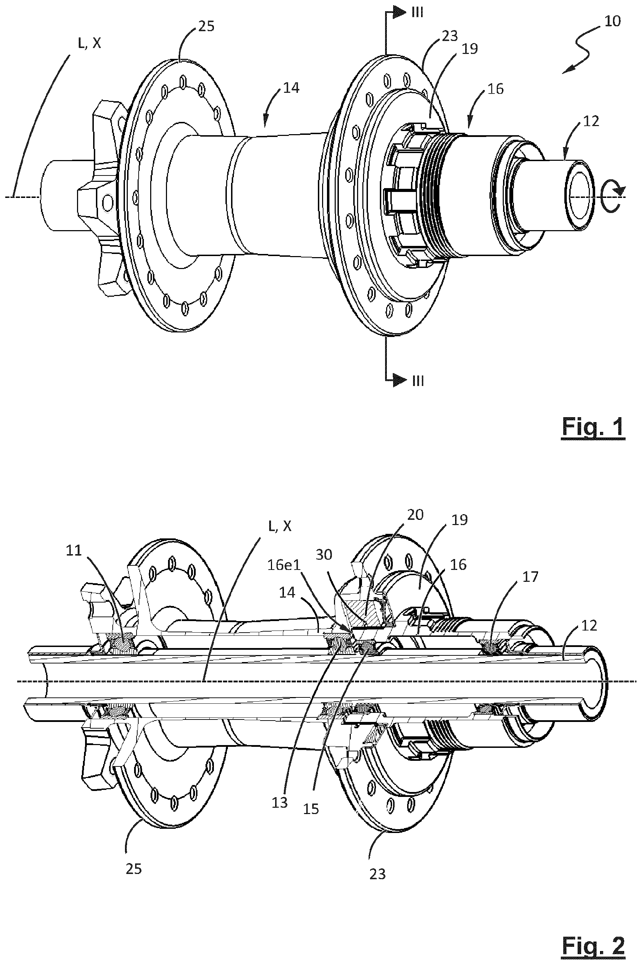

**Fig. 1** zeigt eine perspektivische Darstellung eines ersten Ausführungsbeispiels einer erfindungsgemäßen Freilaufnabe 10, während **Figur 2** eine Dreiviertel-Längsschnitt-Ansicht der gleichen Nabe zeigt.

Begriffe wie "axial" und "radial" beziehen sich in dieser Anmeldung, sofern nicht anders angegeben, stets auf die Längsachse L der Freilaufnabe 10, die mit der gemeinsamen Drehachse X sowie im eingebauten Zustand mit der Hinterradachse des Fahrrads zusammenfällt.

Die Freilaufnabe 10 umfasst eine Nabenachse 12, die in bekannter Weise am Rahmen eines Fahrrads fixiert werden kann. An der Nabenachse 12 ist über zwei Wälzlager 11 und 13 eine Nabenhülse 14 und über zwei weitere Wälzlager 15 und 17 ein Antreiber 16 jeweils drehbar um die gemeinsame Drehachse X gelagert.

Der Antreiber 16 ist auf konventionelle Weise mit einer hier nicht dargestellten Ritzelanordnung verbindbar, über die Drehmoment in den Antreiber 16 eingeleitet werden kann, während die Nabenhülse 14 zwei Speichenflansche 23, 25 zur Verbindung mit den ebenfalls nicht dargestellten Speichen eines Hinterrads aufweist. Ein der Nabenhülse 14 zugewandtes Längsende 16e1 des Antreibers 16 ist in die Nabenhülse 14 eingesteckt. In dem axialen Bereich der Nabe, in dem Nabenhülse 14 und Antreiber 16 einander überlappen, ist eine Sperrkörper-Anordnung 18 im Inneren der Freilaufnabe 10 vorgesehen, von der ein Sperrkörper 20 in der Schnittdarstellung von **Fig. 2** sichtbar ist.

Ein Abdeckring 19 verhindert, dass Schmutz oder/und Feuchtigkeit in den radialen Spalt zwischen Antreiber 16 und Nabenhülse 14 eindringt.

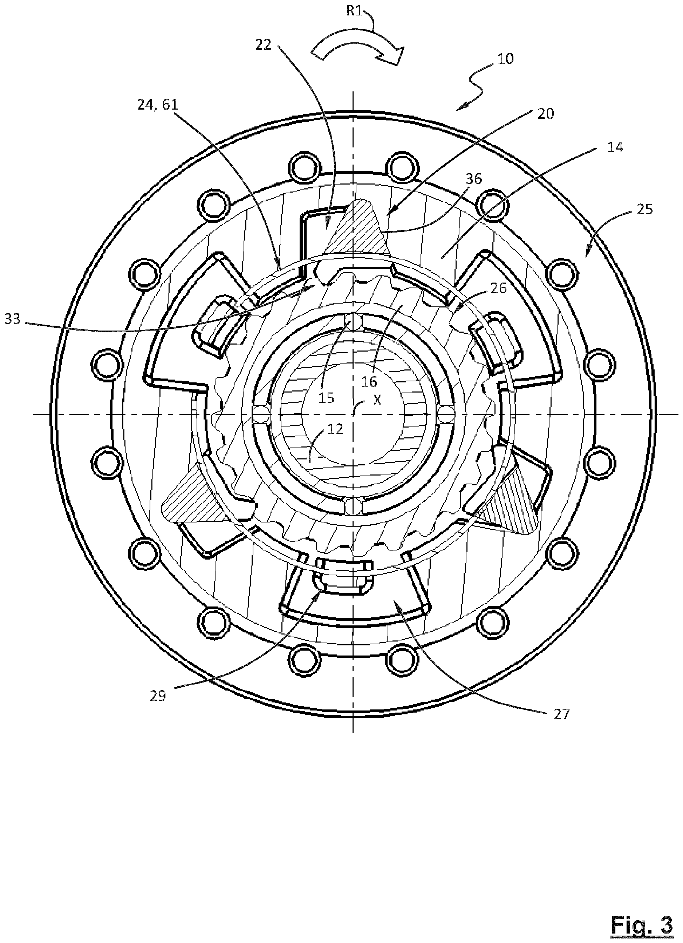

Wie am besten der Querschnittsansicht von **Figur 3** zu entnehmen ist, weist die Nabenhülse 14 zur Lagerung der Sperrkörper 20 vorliegend drei um den Umfang der Nabenhülse 14 verteilte, radiale Sperrkörper-Ausnehmungen 22 auf.

In Umfangsrichtung zwischen den Sperrkörper-Ausnehmungen sind aus Gründen der Gewichtsreduzierung drei weitere Ausnehmungen 27 mit jeweils einem darin angeordneten Lagervorsprung 29 in der Nabenhülse 14 vorgesehen.

Die hier als Sperrklinken 50 ausgebildeten Sperrkörper 20 sind in den zugeordneten Sperrkörper-Ausnehmungen 22 jeweils zwischen einer Sperrstellung und einer Freigabestellung verschwenkbar gelagert und werden durch einen Sprengring 61 als Vorspanneinrichtung 24 jeweils zur Sperrstellung vorgespannt und in der Nabenhülse 14 gehalten.

Im dargestellten Beispiel befinden sich von den drei Sperrklinken 50 diejenigen Sperrklinken in der 12-Uhr Position und in der 8-Uhr Position aus **Fig. 3** in der Sperrstellung, in der ein Eingriffsabschnitt 33 der jeweiligen Sperrklinke 50 in die radiale Mitnahmeverzahnung 26 eingreift, die am Außenumfang des Antreibers 16 an dessen Längsende 16e1 vorgesehen ist, während sich die Sperrklinke in der 4 Uhr-Position in **Fig. 3** aufgrund ihrer Winkelposition relativ zum Antreiber 16 in der Freigabestellung befindet, in der die Sperrklinke 50 nicht im Eingriff mit der Mitnahmeverzahnung 26 steht. Dies dient im vorliegenden Fall in erster Linie der Illustration von Sperrstellung und Freigabestellung in der gleichen Figur.

Anders als dargestellt könnten die drei Sperrkörper-Ausnehmungen 22 bevorzugt auch so angeordnet sein, dass sich immer alle Sperrkörper gleichzeitig in der Sperrstellung bzw. der Freigabestellung befinden.

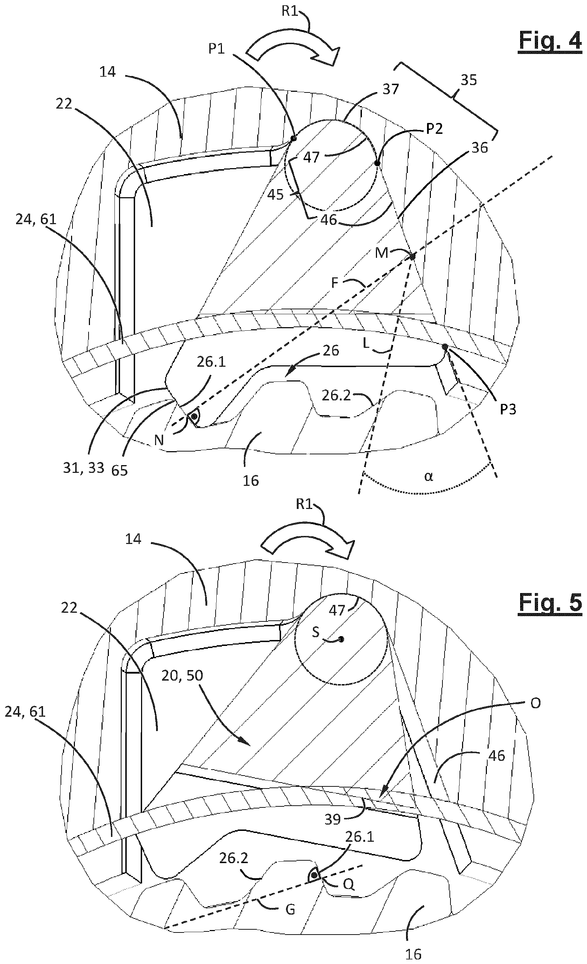

Ausschnittvergrößerungen von Fig. 3 sind in Figur 4 und 5 dargestellt, wobei Fig. 4 den Sperrkörper 20 in der Sperrstellung und Figur 5 den Sperrkörper 20 in der Freigabestellung zeigt.

Die Schnittebene der Ansichten der Figuren 3 bis 5 ist dabei so gewählt, dass sie mittig durch die Nuten 30 der Sperrkörper 20 hindurch verläuft, in denen der Sprengring 61 aufgenommen ist.

Bei Rotation des Antreibers 16 in der ersten Drehrichtung R1 wird über diejenigen Sperrklinken 50 in der Sperrstellung Drehmoment vom Antreiber 16 auf die Nabenhülse 14 und damit auf das Hinterrad des Fahrrads übertragen.

Allerdings kann die Nabenhülse 14 den Antreiber 16 in der ersten Drehrichtung R1 überholen, was einer Rotation der Nabenhülse 14 relativ zum Antreiber 16 in der ersten Drehrichtung R1 bzw. einer Rotation des Antreibers 16 relativ zur Nabenhülse 14 entgegen der ersten Drehrichtung R1 entspricht, da bei einer solchen Bewegung die Eingriffsabschnitte 33 der Sperrklinken 50 über die flacheren, in der ersten Drehrichtung R1 nachlaufenden Zahnflanken 26.2 der Mitnahmeverzahnung 26 hinweg gleiten können, bzw. die Sperrklinken 50 von den Zahnflanken 26.2 während der Rotation immer wieder in die Freigabestellung verschwenkt werden.

Wie am besten in **Figur 4** zu erkennen ist, liegt der Sperrkörper 20 in der Sperrstellung mit einem Teil seiner Oberfläche, der hier als Kopplungsfläche 35 bezeichnet wird, an einer entsprechenden Anlagefläche 45 der Ausnehmung 22 an, wobei sich die Kopplungsfläche 35 im dargestellten Beispiel zusammensetzt aus einem konvex zylindrisch gebogenen Bereich 37, der zur verschwenkbaren Lagerung des Sperrkörpers 20 dient, und einem planaren Bereich 36, der zur Übertragung von Drehmoment auf die Nabenhülse 14 bei Rotation des Antreibers 16 in der ersten Drehrichtung R1 dient. Entsprechend setzt sich die Anlagefläche 45 der Sperrkörper-Ausnehmung 22 aus einem konkav zylindrisch gebogenen Lagerbereich 47 und einem planaren Bereich 46 zusammen.

In der Querschnittansicht der Figur 4 erstreckt sich der gebogene Bereich 37 zwischen den markierten Punkten P1 und P2, der planare Bereich zwischen den Punkten P2 und P3.

Größe und Neigung des planaren Bereichs 36 sind im Hinblick auf eine effektive Übertragung von Drehmoment bei gleichzeitig stabiler Lagerung des Sperrkörpers 20 ausgewählt. Erfindungsgemäß macht der planare Bereich 36 mehr als die Hälfte der Kopplungsfläche 35 aus.

Der Winkel α zwischen dem planaren Bereich 36 und dem Lot L vom Mittelpunkt M des planaren Bereichs 36 auf die Drehachse X beträgt bevorzugt nicht mehr als 30°, so dass die tangentiale Komponente der eingeleiteten Kraft effektiv übertragen werden kann.

Im in **Fig**. **4** dargestellten Beispiel beträgt der planare Bereich 36 der Kopplungsfläche 35 mehr als das Fünffache des Zahnkontaktbereichs 65, also des Bereichs der Oberfläche des Sperrkörpers 20, der in der Sperrstellung in flächigem Kontakt mit der in der ersten Drehrichtung R1 vorlaufenden Zahnflanke 26.1 der radialen Mitnahmeverzahnung 26 steht.

Weiterhin schneidet im dargestellten Beispiel für eine vorteilhafte Kraftweiterleitung eine Senkrechte F auf den Zahnkontaktbereich 65 durch den Mittelpunkt N des Zahnkontaktbereichs 65 den planaren Bereich 36 der Kopplungsfläche 35 des Sperrkörpers 20, und zwar vorzugsweise im oder nahe dem Mittelpunkt M des planaren Bereichs 36.

Aus technischen Gründen bei der Erstellung der Figuren ist es nicht möglich, eine Verformung des Sprengrings 61 durch den Sperrkörper 20 darzustellen, aber aus den überlappenden Bereichen von Sprengring 61 und Sperrkörper 20 in den Figuren 4 und 5 kann auf die Verformung des Sprengrings 61 und die daraus resultierenden Kräfte geschlossen werden,

So zeigt die nur minimale Überlappung in Figur 4, dass die Vorspanneinrichtung 24 in der Sperrstellung des Sperrkörpers 20 weitgehend entspannt ist und den Sperrkörper 20 nur leicht radial nach außen in den konkav zylindrisch gebogenen Lagerbereich 47 der Sperrkörper-Ausnehmung 22 hinein drückt und so den Sperrkörper an der Nabenhülse 14 hält.

Überholt, ausgehend von der Position der Figur 4, die Nabenhülse 14 den Antreiber 16 in der ersten Drehrichtung R1, so wird die Sperrklinke 50 von der Zahnflanke 26.2 aus der Sperrstellung im Uhrzeigersinn in die Freigabestellung verschwenkt, die in Figur 5 illustriert ist. Die Position der Schwenkachse S der Verstellbewegung der Sperrklinke 50 zwischen der Sperrstellung und der Freigabestellung ist dabei durch den zylindrisch gebogenen Lagerbereich 47 der Sperrkörper-Ausnehmung 22 definiert, wie in Fig. 5 angedeutet ist.

Der in Fig. 5 erkennbare, deutlich größere Überlappungsbereich O zwischen dem Sprengring 61 und dem Sperrkörper 20 zeigt, dass der Sprengring 61 durch den Sperrkörper 20 dabei so verformt wird, dass er im rechten Bereich des Sperrkörpers 20 in Fig. 5 auf einen Boden 39 der Nut 30 drückt und so den Sperrkörper 20 zu einer Schwenkbewegung entgegen dem Uhrzeigersinn zurück zur Sperrstellung vorspannt.

Aus Figur 5 geht weiter hervor, dass im dargestellten Beispiel die Zahnhöhe und die Neigung der in der ersten Drehrichtung R1 vorlaufenden Zahnflanken 26.1 der radialen Mitnahmeverzahnung 26 des Antreibers 16 so gewählt sind, dass eine Senkrechte G auf eine in der ersten Drehrichtung vorlaufende Zahnflanke 26.1 durch einen Mittelpunkt Q dieser Zahnflanke 26.1 die in der ersten Drehrichtung R1 nachlaufende Zahnflanke 26.2 des gleichen Zahns nicht schneidet, was das Risiko eines Abscherens der Zähne im Betrieb verringert.

Bei einem Sperrkörper, der mehr als einen Arm 31 aufweist, kann dahingegen die in der ersten Drehrichtung vorlaufende Zahnflanke 26.1 steiler verlaufen bzw. die Zahnhöhe geringer ausfallen, da sich in diesem Fall die im Betrieb auf die Mitnahmeverzahnung wirkende Kraft auf die verschiedenen Arme verteilt.

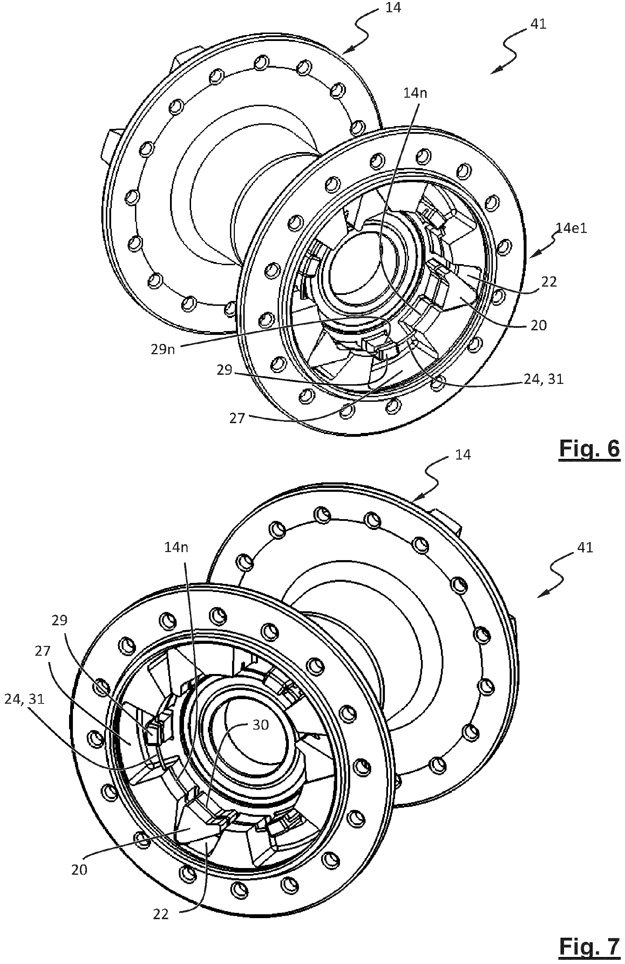

Da der Sprengring 61 die Sperrkörper-Anordnung 18 an der Nabenhülse 14 hält und ein Herausfallen der Sperrkörper 20 aus den Sperrkörper-Ausnehmungen 22 verhindert, können die vorgenannten Bauteile zu einer ersten Baugruppe 41 vormontiert werden, die in den **Figuren 6 und 7** aus unterschiedlichen Blickwinkeln dargestellt ist. In diesen Ansichten ist erkennbar, dass die Nabenhülse 14 sowohl im Bereich zwischen den einzelnen Ausnehmungen 22, 27 als auch im Bereich der Lagervorsprünge 29 Nuten 14n bzw. 29n zur Aufnahme und Führung des Sprengrings 61 aufweist.

Ferner zeigen diese Figuren, dass die Ausnehmungen 22, 27 nicht nur nach radial innen sondern auch axial an dem Längsende 14e1 der Nabenhülse 14 offen sind, das im montiertem Zustand dem Antreiber 16 zugewandt ist, sie werden im fertig montierten Zustand (Fig. 1) jedoch durch die Abdeckung 19 abgedeckt.

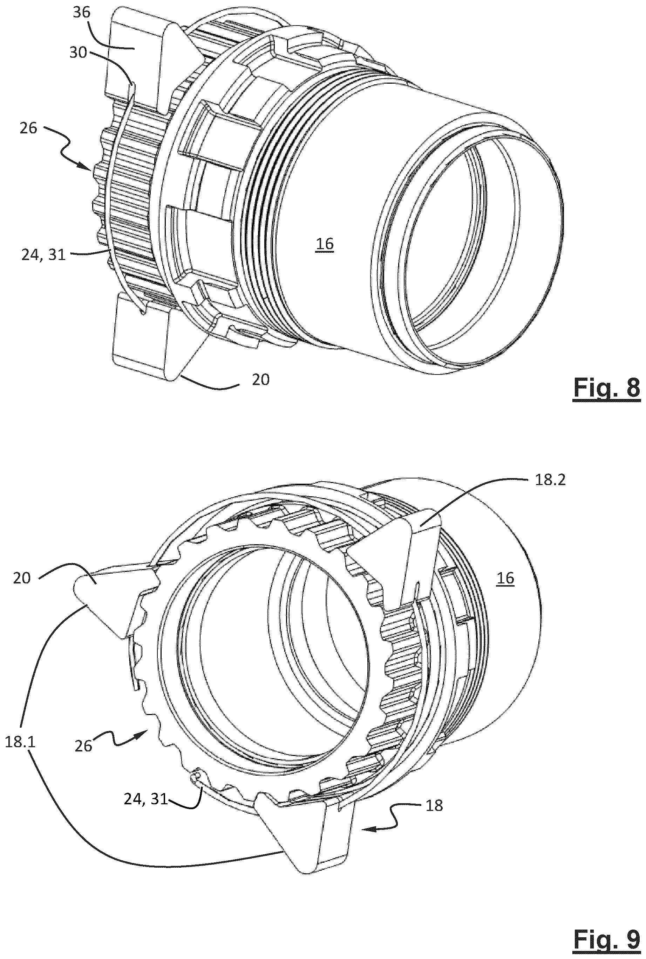

Die **Figuren 8 und 9** zeigen die Freilaufnabe des ersten Ausführungsbeispiels bei ausgeblendeter Nabenachse und Nabenhülse aus unterschiedlichen Blickwinkeln. Wie diese Figuren zeigen, lassen sich die Sperrkörper 10 hierbei zwei verschiedenen Gruppen 18.1 und 18.2 zuordnen, wobei die Gruppe 18.1 zwei Sperrkörper und die Gruppe 18.2 nur einen Sperrkörper aufweist.

Die Sperrkörper 20 sind so verteilt angeordnet, dass für jede der beiden Gruppen, alle Sperrkörper der jeweiligen Gruppe bei geeigneter Rotationsstellung der Mitnahmeverzahnung gleichzeitig in diese eingreifen, während Sperrkörper verschiedener Gruppen nicht gleichzeitig in die Mitnahmeverzahnung eingreifen können.

Hierdurch kann für eine Mitnahmeverzahnung 26 mit vorgegebener Zähnezahl die Zeit verkürzt werden, die maximal benötigt wird, bis nach Beginn einer Rotation des Antreibers 16 in der ersten Drehrichtung R1 Drehmoment auf die Nabenhülse 14 übertragen wird.

In der Praxis ist es in diesem Fall allerdings bevorzugt, dass alle Gruppen die gleiche Anzahl von Sperrkörpern aufweisen, etwa einen, zwei oder drei Sperrkörper, während im vorliegenden Fall die verschiedenen Gruppen in erster Linie der Illustration von Sperr- und Freigabestellung in einer einzigen Schnittansicht dienen.

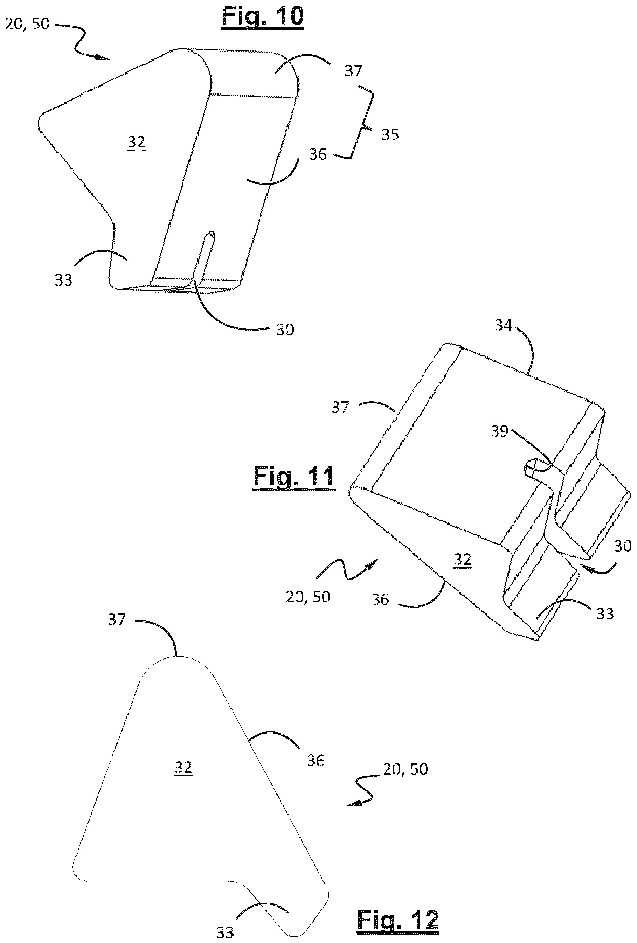

Schließlich ist einer der als "Flachklinke" ausgebildeten Sperrkörper 20 des ersten Ausführungsbeispiels in den **Figuren 10 bis 12** noch einmal separat und aus unterschiedlichen Blickwinkeln betrachtet dargestellt.

Wie die Figuren zeigen, weist der Sperrkörper 20 zwei flache, parallele Seitenwände 32, 34 und, abgesehen von der Nut 30, für alle zu den Seitenwänden 32, 34 parallele Schnittebenen die gleiche Querschnittsform auf.

In der in Fig. 12 gezeigten Aufsicht auf die Seitenwand 32 weist der Sperrkörper 20 die Grundform eines nahezu gleichschenkligen, an der Spitze abgerundeten Dreiecks auf wobei von dieser Grundform in Verlängerung eines der Dreieck-Schenkel der Eingriffsabschnitt 33 vorsteht.

Im Vergleich zu herkömmlichen Klinken, bei denen an den Eingriffsabschnitt direkt ein im Wesentlichen zylindrischer Lagerabschnitt angrenzt, weist der erfindungsgemäße Sperrkörper zur effektiveren Drehmomentübertragung eine Kopplungsfläche mit einem großen flachen Bereich 36 auf, woraus sich die hier vorgeschlagene Bezeichnung Flachklinke ergibt.

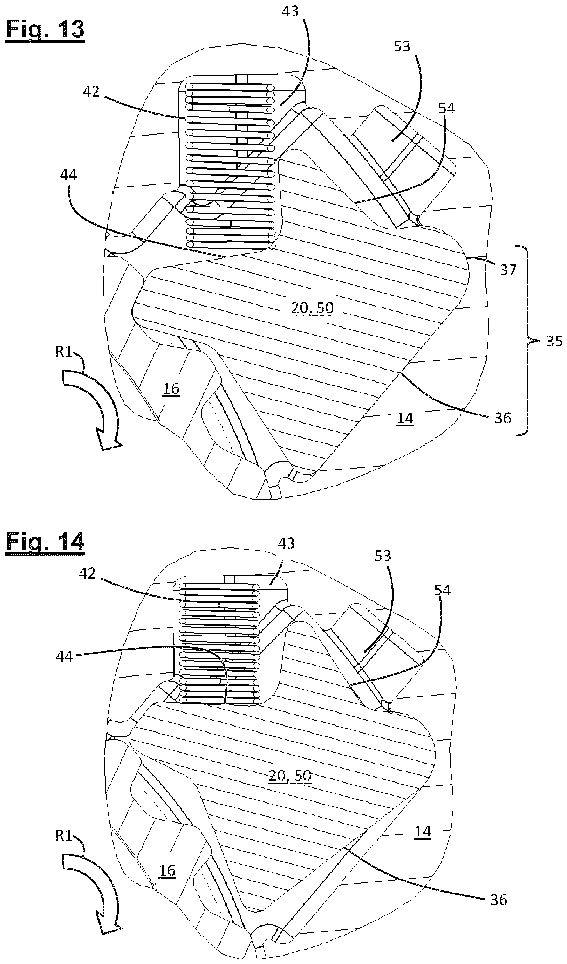

Die **Figuren 13 bis 17** illustrieren weitere Ausführungsbeispiele der Erfindung.

Die Figuren **13 und 14** entsprechen in den Ansichten ungefähr den Figuren 4 und 5, zeigen also jeweils eine vergrößerte Querschnittansicht des Sperrkörpers in der Sperr- und Freigabestellung und illustrieren eine Ausführungsvariante, bei der jede Sperrklinke 50 durch eine separate Schraubendruckfeder 42 zur Sperrstellung vorgespannt ist. Die Vorspanneinrichtung 24 wird in diesem Fall also durch die Gesamtheit der Schraubendruckfedern 42 gebildet.

Die Form der Sperrklinken 50 und der Sperrklinken-Ausnehmungen ist in Abweichung vom ersten Ausführungsbeispiel dabei so gestaltet, dass es zwei Möglichkeiten zur Positionierung der Federn gibt, nämlich wahlweise in einer ersten Federaufnahme 43 oder in einer zweiten Federaufnahme 53, die an unterschiedlichen Stellen der Sperrkörper-Ausnehmung 22 ausgebildet sind.

Entsprechend weist der Sperrkörper 20 zwei Druckflächen 44, 54 auf, auf die je nach Wahl der Federaufnahme 43, 53 in der Freigabestellung des Sperrkörpers 20 von der entsprechend positionierten Schraubenfeder Druck ausgeübt wird, um den Sperrkörper zur Sperrstellung vorzuspannen.

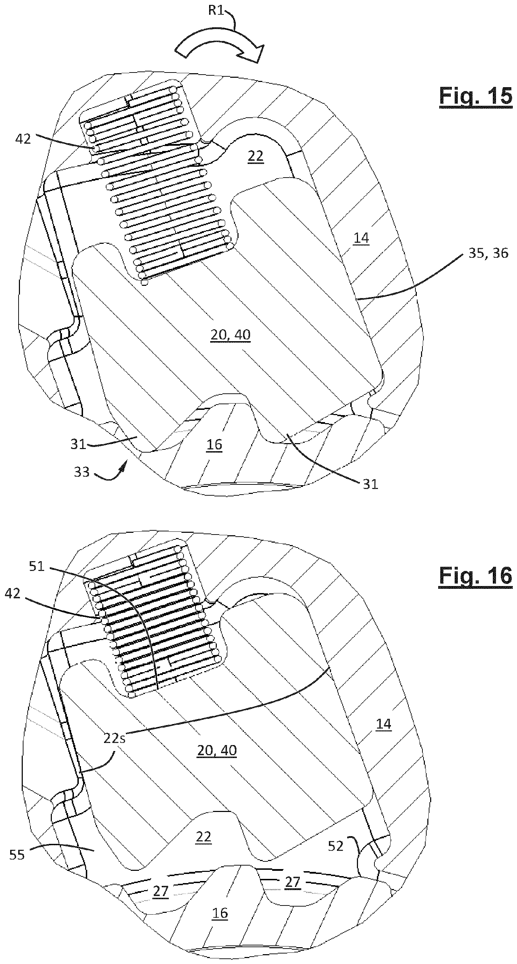

Beim dritten und vierten Ausführungsbeispiel der Figuren 15 bis 17 sind die Sperrkörper 20 im Unterschied zu den ersten beiden Ausführungsbeispielen nicht als Sperrklinken sondern als Sperrschieber 40 ausgebildet.

**Figuren 15 und 16** entsprechen wieder den Ansichten der Figuren 4 und 5 für ein drittes Ausführungsbeispiel der Erfindung. Ähnlich wie beim zweiten Ausführungsbeispiel ist wieder für jeden Sperrkörper 20 eine Schraubendruckfeder vorgesehen, die in der Freigabestellung (Fig. 16) des Sperrkörpers auf eine vertieft ausgebildete Druckfläche 51 drückt, um den Sperrkörper 20 zur Sperrstellung (Fig. 15) hin vorzuspannen, wobei die Verstellbewegung jedoch im Unterschied zum zweiten Ausführungsbeispiel eine Translationsbewegung ist.

Bei den Sperrschieber-Lösungen der Figuren 15 bis 17 ist die gesamte Kopplungsfläche 35 jedes Sperrkörpers 20 planar ausgebildet und somit identisch mit dem planaren Bereich 36.

Der Eingriffsabschnitt 33 des dort dargestellten Sperrschiebers 40 weist im Unterschied zu den vorhergehenden Ausführungsbeispielen nicht nur einen sondern zwei Eingriffsarme 31 auf, die in benachbarte Zahnzwischenräume 27 der Mitnahmeverzahnung 26 eingreifen, so dass die vom Antreiber 16 bei dessen Drehung in der ersten Drehrichtung R1 auf den Sperrkörper 20 in der Sperrstellung übertragene Kraft auf die beiden Anlageflächen der Eingriffsarme 31 aufgeteilt wird.

Die Translationsbewegung der Sperrschieber 40 bei der Bewegung zwischen der Sperrstellung und der Freigabestellung verläuft bei dem Beispiel der Figuren 15 und 16 nicht vollständig radial sondern leicht geneigt, entsprechend der Steigung der steileren Zahnflanken 26.1 der Mitnahmeverzahnung 26, und die Bewegung wird durch zwei im Wesentlichen parallele Seitenwände 22s der Sperrkörper-Ausnehmung 22 geführt.

Damit die Sperrschieber 40 bei der Montage nicht aus den Sperrkörper-Ausnehmungen 22 radial nach innen herausfallen, ist an der radial inneren und in Drehrichtung R1 vorlaufenden Kante der Sperrschieber-Ausnehmung 22 vorzugsweise ein Rückhalte-Vorsprung 52 vorgesehen, wobei das Einsetzen der Sperrschieber 40 in diesem Fall durch eine an der radial inneren und in Drehrichtung R1 nachlaufenden Kante der Sperrschieber-Ausnehmung 22 vorgesehene zusätzliche Einsetz-Ausnehmung 55 erleichtert werden kann.

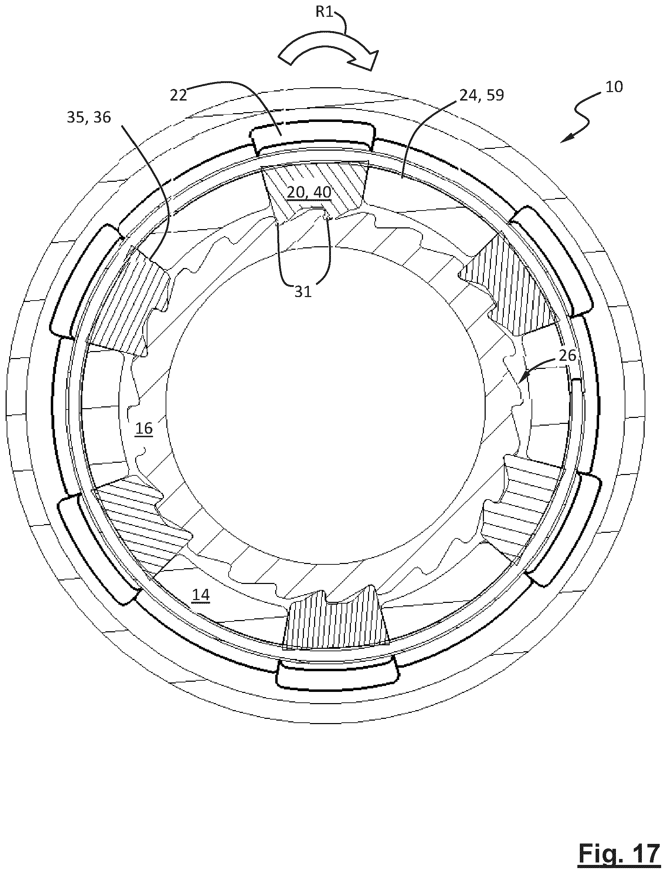

Im Ausführungsbeispiel der **Fig. 17** sind sechs Sperrschieber 40 mit jeweils zwei Eingriffsarmen 31 vorgesehen, die im Unterschied zum Beispiel der Figuren 15 und 16 gemeinsam durch einen einzigen Wurmfederring 59 als Vorspanneinrichtung radial nach innen zur Sperrstellung vorgespannt werden. Die Sperrkörper-Ausnehmungen 22 verjüngen sich in diesem Beispiel leicht nach radial innen, so dass die Vorspanneinrichtung 24 die Sperrkörper 20 auch in diesem Beispiel an der Nabenhülse 14 hält.

Es ist nachzutragen, dass die Sperrkörper-Ausnehmungen an einem Bauteil aus Antreiber und Nabenhülse vorgesehen sind, und zwar in allen hier dargestellten Ausführungsbeispielen an der Nabenhülse, während die Mitnahmeverzahnung an dem jeweils anderen Bauteil aus Antreiber und Nabenhülse vorgesehen ist, nämlich in allen dargestellten Ausführungsbeispielen am Antreiber. Eine umgekehrte Anordnung wäre jedoch auch denkbar.

Die erfindungsgemäß vorgeschlagene Freilaufnabe ist leicht, klein und günstig, und sie kann sehr einfach an unterschiedliche Anforderungen angepasst werden.

Insbesondere ermöglichen es die neuartigen, hier beschriebenen Flachklinken, einige Vorteile von Sperrschiebern und konventionellen rotatorischen Sperrklinken zu verbinden.

## Patentansprüche

1. Freilaufnabe (10) für ein Fahrrad, umfassend:
einen Antreiber (16) und eine Nabenhülse (14), die jeweils um eine gemeinsame Drehachse (X) drehbar an einer Nabenachse (12) gelagert sind,
eine Sperrkörper-Anordnung (18) mit wenigstens einem Sperrkörper (20), der zwischen einer Sperrstellung und einer Freigabestellung verstellbar in einer radialen Sperrkörper-Ausnehmung (22) gelagert ist, und
eine Vorspanneinrichtung (24), die dazu konfiguriert ist, den Sperrkörper (20) zur Sperrstellung hin vorzuspannen,
wobei die Sperrkörper-Ausnehmung (22) in einem Bauteil aus Antreiber (16) und Nabenhülse (14) vorgesehen ist, während das andere Bauteil aus Antreiber (16) und Nabenhülse (14) eine radiale Mitnahmeverzahnung (26) aufweist oder drehfest mit der Mitnahmeverzahnung (26) verbunden ist,
wobei die Oberfläche des Sperrkörpers (20) eine Kopplungsfläche (35) aufweist, die in der Sperrstellung an einer Anlagefläche (45) der Sperrkörper-Ausnehmung (22) anliegt, während ein Eingriffsabschnitt (33) des Sperrkörpers (20) in die Mitnahmeverzahnung (26) eingreift, so dass bei Rotation des Antreibers (16) in einer ersten Drehrichtung (R1) um die Drehachse (X) Drehmoment über die Kopplungsfläche (35) vom Antreiber (16) auf die Nabenhülse (14) übertragen wird, und wobei der Sperrkörper (20) in der Freigabestellung eine Rotation der Nabenhülse (14) in der ersten Drehrichtung (R1) relativ zum Antreiber (16) zulässt,
**dadurch gekennzeichnet, dass** mehr als die Hälfte der Kopplungsfläche (35) als planarer Bereich (36) ausgebildet ist.

2. Freilaufnabe nach Anspruch 1,
wobei die gesamte Kopplungsfläche (35) planar ausgebildet ist und der Sperrkörper (20) als Sperrschieber (40) in einer Translationsbewegung zwischen der Sperrstellung und der Freigabestellung verstellbar ist.

3. Freilaufnabe nach Anspruch 1,
wobei die Kopplungsfläche (35) sich aus dem planaren Bereich (36) und einem gebogenen Bereich (37), insbesondere einem zylindrischen Bereich zusammensetzt, wobei der gebogene Bereich (37) zur drehbaren Lagerung des Sperrkörpers (20) als Sperrklinke (50) bei seiner Schwenkbewegung zwischen der Sperrstellung und der Freigabestellung dient.

4. Freilaufnabe (10) nach einem der vorhergehenden Ansprüche,
wobei der planare Bereich (36) der Kopplungsfläche (35) mit dem Lot (L) vom Mittelpunkt (M) des planaren Bereichs (36) auf die Drehachse (X) einen Winkel (α) von nicht mehr als 30° einschließt, bevorzugt von nicht mehr als 20°, noch mehr bevorzugt von nicht mehr als 10°.

5. Freilaufnabe (10) nach einem der vorhergehenden Ansprüche,
wobei die Vorspanneinrichtung (24) eine Feder umfasst, die dazu konfiguriert ist, mehrere Sperrköper (20) der Sperrkörper-Anordnung (18), bevorzugt alle Sperrkörper (20), zur jeweiligen Sperrstellung hin vorzuspannen.

6. Freilaufnabe (10) nach einem der vorhergehenden Ansprüche, wobei die Sperrkörper-Anordnung (18), die Vorspanneinrichtung (24) und dasjenige Bauteil aus Antreiber (16) und Nabenhülse (14), an dem die wenigstens eine Sperrkörper-Ausnehmung (22) vorgesehen ist, zu einer ersten Baugruppe (41) vormontierbar sind, wobei die Vorspanneinrichtung (24) die Sperrkörper-Anordnung (18) an dem Bauteil hält.

7. Freilaufnabe (10) nach Anspruch 6, wobei der Sperrköper (20) als Sperrschieber (40) ausgebildet ist, der in einer Translationsbewegung zwischen der Freigabestellung und der Sperrstellung verstellbar ist, und wobei die Sperrkörper-Ausnehmung (22) sich radial einwärts verjüngt und die Vorspanneinrichtung (24) den Sperrschieber (40) radial einwärts vorspannt.

8. Freilaufnabe (10) nach einem der vorhergehenden Ansprüche, wobei der Eingriffsabschnitt (33) des Sperrkörpers zwei oder mehr Arme (31) aufweist, die dazu ausgebildet sind, in der Sperrstellung in benachbarte Zahnzwischenräume (27) der Mitnahmeverzahnung (26) einzugreifen.

9. Freilaufnabe (10) nach einem der vorhergehenden Ansprüche, **dadurch gekennzeichnet, dass** die Sperrkörper-Anordnung (18) mehrere Gruppen (18.1, 18.2) von Sperrkörpern (20) aufweist, die in jeweiligen Sperrkörper-Ausnehmungen (22) um den Umfang des einen Bauteils so verteilt gelagert sind, dass für jede der Gruppen (18.1, 18.2) die Sperrkörper (20) der jeweiligen Gruppe (18.1, 18.2) in der Sperrstellung bei geeigneter Rotationsstellung der Mitnahmeverzahnung (26) gleichzeitig in diese eingreifen, während Sperrkörper (20) verschiedener Gruppen (18.1, 18.2) nicht gleichzeitig in die Mitnahmeverzahnung (26) eingreifen können.

10. Freilaufnabe (10) nach einem der vorhergehenden Ansprüche, **dadurch gekennzeichnet, dass** der planare Bereich (36) der Kopplungsfläche (35) mehr als das Zweifache eines Zahnkontaktbereichs (65) der Oberfläche des Sperrkörpers (20) beträgt, bevorzugt mehr als das Dreifache, besonders bevorzugt mehr als das Fünffache, wobei der Zahnkontaktbereich (65) derjenige Bereich der Oberfläche des Sperrkörpers (20) ist, der in der Sperrstellung in flächigem Kontakt mit den in der ersten Drehrichtung (R1) vorlaufenden Zahnflanken (26.1) der Mitnahmeverzahnung (26) steht.

11. Freilaufnabe (10) nach Anspruch 10, **dadurch gekennzeichnet dass** eine Senkrechte (F) auf den Zahnkontaktbereich (65) durch den Mittelpunkt (N) des Zahnkontaktbereichs (65) den planaren Bereich (36) der Kopplungsfläche (35) schneidet, bevorzugt im Mittelpunkt (M) des planaren Bereichs (36).
